# EUROPEAN PATENT APPLICATION

(11) **EP 1 868 323 A1**
(43) Date of publication of application: **19.12.2007**
(21) Application number: 06729483.5
(22) Date of filing: 20.03.2006
(51) Int. Cl.: H04L 12/28, H04Q 7/38

(54) **CONNECTION PARAMETER SETTING SYSTEM, METHOD THEREOF, ACCESS POINT, SERVER, RADIO TERMINAL, AND PARAMETER SETTING DEVICE**

(30) Priority: 22.03.2005 JP 2005081154
(71) Applicant: NEC CORPORATION, Minato-ku, Tokyo 108-0014 (JP)
(72) Inventor: FUJIWARA, Ryuhei, Tokyo, 1080014 (JP); SATO, Naoki, Tokyo, 1080014 (JP); ARIGA, Kenichi, Tokyo, 1080014 (JP)
(74) Representative: Glawe, Delfs, Moll
(86) International application number: PCT/JP2006/305515
(87) International publication number: WO 2006/101065

(57) **Abstract**

An access point performing a communication with a wireless terminal performing a communication according to a predetermined wireless communication specification acquires a connection parameter required for a communication based on the predetermined wireless communication specification from a connection parameter server which can be connected thereto through a network. The access point sets an access point connection parameter in the access point itself. The wireless terminal acquires a wireless terminal connection parameter by using a communication method not requiring setting from the access point in advance and sets it in the wireless terminal itself. This completes the setting for performing a communication based on the predetermined wireless communication specification and it is possible to start a communication based on the predetermined wireless communication specification between the wireless and access point. Thus, it is possible to set a connection parameter for a wireless communication in the wireless terminal and access point without requiring a complicated setting work by a user.

## Description

### Technical Field

The present invention relates to a connection parameter setting system, a method thereof, an access point, a server, a wireless terminal, and a parameter setting apparatus and, more particularly, to a method of setting a communication parameter in both a wireless terminal and an access point for enabling a communication between them.

### Background Art

As a technique for wirelessly connecting a plurality of electronic apparatuses to one another, IEEE (Institute of Electrical and Electronics Engineers) 802.11a/b/g, Bluetooth®, and the like are known.

IEEE 802.11a/b/g is used for establishing a wireless communication between an electronic apparatus such as a personal computer or mobile phone and an access point to thereby set up a wireless LAN.

For example, in an invention disclosed in Patent Document 1, a communication terminal reads out a communication parameter which has previously been stored in an IC card or non-contact IC card in which an integrated circuit (IC) is mounted so as to perform a setting for establishing a communication between a communication terminal and access point. In this case, information is delivered to the communication through the IC card to thereby automatically set the communication parameter in the terminal.

An invention disclosed in Patent Document 2 provides a technique that uses a wireless LAN (Local Area Network) to set a communication parameter of a wireless terminal that performs a communication through the wireless LAN. In this technique, two access points (AP1 and AP2) are provided on the network side. The access point AP1 is provided for data communication, and access point AP2 is for notifying a wireless communication of a communication parameter. In this configuration, the wireless terminal receives a communication parameter required for connecting from the AP2, to which unspecified terminal is accessible, to the AP1. Then, the wireless terminal sets the communication parameter received from the AP2 therein and, thereby, connection between the wireless terminal and AP1 is established to allow data communication therebetweeen. That is, when the wireless terminal receives information from an access point dedicated to communication parameter acquisition, the communication parameter of the terminal is automatically set therein.

Patent Document 1: JP 2003-229872-A
Patent Document 2: JP 2004-127187-A

### Disclosure of the Invention

### Problems to be Solved by the Invention

In the case where the abovementioned wireless connection technique is used to connect a wireless terminal and access point so as to set up a wireless LAN, it is possible to use a method of setting a wireless communication parameter such as an ID (Identification Data), password, electronic certificate in a wireless terminal and access point (or authentication server which operates in collaboration with the access point) in order to connect a specified device to the wireless LAN. Further, in order for the wireless terminal to perform a communication using the network after connecting to the access point, it is also necessary to set information concerning a network or service such as a DNS (Domain Name Server) server address, Web proxy address, subnet mask. Hereinafter, information concerning the wireless communication parameter, network, and service is collectively referred to as "connection parameter".

However, it is troublesome and difficult for a user to set the connection parameter such as ID or password in the wireless terminal and access point. In particular, the connection parameter setting for the access point needs to be made through a personal computer connected by wire to the access point. Considering a wireless LAN deployed in the home, if a user does not have a personal computer, he or she cannot even make an access point setting.

The problems that the present invention intends to solve are the following.

The first problem is that a connection parameter setting work for the wireless terminal and access point constituting the wireless LAN is complicated. That is, in order to establish a communication between the wireless terminal and access point, it is necessary to set a connection parameter such as ID or password both in the wireless terminal and access point. Further, the ID and password are each composed of a meaningless character string in general and, in the case where a mobile phone is used as the wireless terminal, the number of input keys on a user interface thereof is restricted by the size, making the setting work very cumbersome. Thus, a user needs to be familiar with the operation of the wireless terminal and access point.

The second problem is that a personal computer is required in order to set the connection parameter for connecting to the access point. That is, the access point setting is supposed to be made through a personal computer connected by wire to the access point, and a setting method other than the one using a personal computer has not been provided.

An object of the present invention is to provide a system capable of setting the connection parameter in the wireless terminal and access point for establishing a wireless connection without requiring a complicated setting work by a user.

Another object of the present invention is to provide a setting system capable of setting an access point without a use of a personal computer.

### Means for Solving the Problems

In a connection parameter setting system according to the present invention, an access point is connected to a connection parameter server through a network. The access point acquires an access point connection parameter and wireless terminal connection parameter from the connection parameter server and transfers the wireless terminal connection parameter to a wireless terminal. This completes the connection parameter setting for the wireless terminal and access point, thereby achieving the above first and second objects.

As a preferred embodiment, the connection parameter setting system according to the present invention is constituted by a wireless terminal such as a PDA, mobile phone, personal computer, an access point, a connection parameter server, and a network. When the access point is connected to the network, a connection parameter acquisition means provided inside the access point accesses the connection parameter server. The connection parameter server transmits a wireless terminal connection parameter and access point connection parameter to the access point. Upon receiving the wireless terminal connection parameter and access point connection parameter, the connection parameter acquisition means sets the access point connection parameter in an access point side wireless communication means and stores the terminal parameter in a terminal connection parameter holding means.

After completion of the abovementioned operation, on the wireless terminal side, a terminal connection parameter acquisition means requests the access point to transmit thereto the terminal connection parameter. In response to this, on the access point side, a terminal connection parameter transmission means receives the terminal connection parameter from the terminal connection parameter holding means and transmits it to the terminal connection parameter acquisition means. A communication between the terminal connection parameter acquisition means and terminal parameter transmission means is carried out by a communication method other than one that a terminal side wireless communication means and access point side wireless communication means use, such as a method using an IrDA, wired connection, short-range wireless communication and a data transfer achieved by interposing an IC card or non-contact card. The terminal connection parameter acquisition means performs parameter setting for the terminal side wireless communication means.

The above operation completes the parameter setting for the terminal side wireless communication means and access point side wireless communication means, thereby enabling a wireless communication between the wireless terminal and access point.

As described above, the access point receives the connection parameter from the connection parameter server and sets the communication parameter in the access point itself and wireless terminal. This configuration allows the connection parameter setting operation for the wireless terminal and access point to automatically be carried out and eliminates the need to use a personal computer for setting the access point.

### Advantages of the Invention

A first advantage is that the connection parameter setting required for the wireless terminal and access point to perform a communication with each other according to a predetermined wireless communication specification can automatically be carried out. That is, the following operation sequence can be carried out in which the access point accesses the connection parameter server, acquires therefrom the wireless terminal connection parameter and access point connection parameter, and sets the access point connection parameter in the access point itself and, at the same time, the wireless terminal acquires the terminal connection parameter from the access point and sets it in the wireless terminal itself.

A second advantage is that there is no need of using an apparatus such as a personal computer for setting the connection parameter for the access point. That is, the access point previously holds the network address or URL of the connection parameter server so as to acquire a required connection parameter from the connection parameter server for setting it.

### Brief Description of the Drawings

FIG. 1 is a block diagram showing a configuration of a connection parameter setting system according to a first embodiment of the present invention;
FIG. 2 is a view showing a data form of the connection parameter in the first embodiment of the present invention;
FIG. 3 is a flowchart showing operation according to the first embodiment of the present invention;
FIG. 4 is a block diagram showing a configuration of a connection parameter setting system according to a second embodiment of the present invention;
FIG. 5 is a block diagram showing a configuration of a connection parameter setting system according to a third embodiment of the present invention;
FIG. 6 is a view showing a data form of the connection parameter in a fourth embodiment of the present invention; and
FIG. 7 is a block diagram showing a configuration of a connection parameter setting system according to a fifth embodiment of the present invention.

### Explanation of Reference Symbols

1: Connection parameter setting system
11: Wireless terminal
12: Access point
13: Connection parameter server
14: Network
111 : Terminal connection parameter acquisition means
112 : Terminal side wireless communication means
121 : Terminal connection parameter transmission means
122 : Terminal connection parameter holding means
123 : Connection parameter acquisition means
124 : Access point side wireless communication means
131 : Connection parameter transmission means
132 : Connection parameter holding means

### Best Mode for Carrying Out the Invention

Embodiments of the present invention will be described in detail below with reference to the accompanying drawings.

### (First Embodiment)

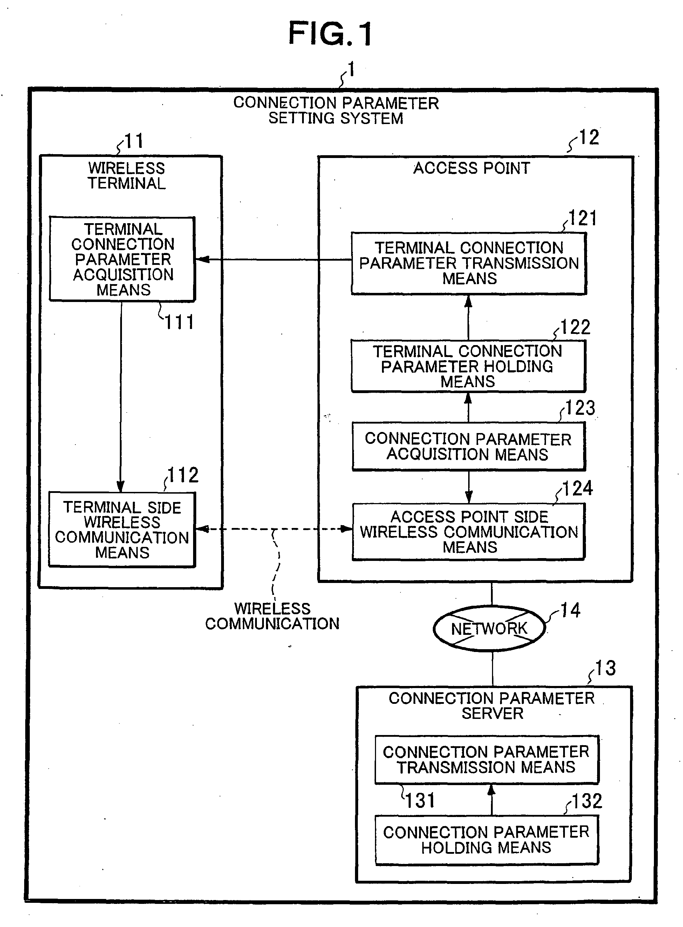

FIG. 1 shows a configuration of a connection parameter setting system for a wireless terminal and access point according to a first embodiment of the present invention.

As shown in FIG. 1, a connection parameter setting system 1 for a wireless terminal and access point according to the present embodiment is constituted by a wireless terminal 11, an access point 12, a connection parameter server 13, and a network 14 connecting the access point 12 and connection parameter server 13.

The wireless terminal 11 functionally includes a terminal connection parameter acquisition means 111 for acquiring a terminal connection parameter from the access point 12 and a terminal side wireless communication means 112 for performing a communication with the access point 12 according to a predetermined wireless communication specification by using the terminal connection parameter. Although only the functions concerning the connection parameter setting are shown in the portion of the wireless terminal 11 in FIG. 1, the wireless terminal 11 may have any other communication functions, such as a telephone function, a browser function, and a mail function, that use the terminal side wireless communication means 112 to perform a communication. The above means 111 and 112 are achieved by, e.g., operations of a not shown communication interface mounted in the wireless terminal 11 and a microcomputer incorporated in the communication interface. The control of the operations of the communication interface and microcomputer is performed by, e.g., a CPU (Central Processing Unit) which is a microcomputer constituting a control unit executing a control program previously stored in a recording medium such as an ROM (Read Only memory).

The access point 12, which is a device which communicates with the wireless terminal 11, functionally includes a terminal connection parameter transmission means 121 for transmitting the terminal connection parameter to the wireless terminal 11, a terminal parameter holding means 122 for storing the terminal connection parameter until a terminal parameter transmission request is issued from the wireless terminal, a connection parameter acquisition means 123 for acquiring a connection parameter including terminal connection parameter and access point connection parameter from the connection parameter server 13, and an access point side wireless communication means 124 for performing a communication with the wireless terminal 11 according to a predetermined wireless communication specification by using the access point connection parameter. The above means 121 to 124 are implemented by, e.g., a not shown communication interface mounted in the access point 12 and a microcomputer incorporated in the communication interface. The control of the operations is performed by, e.g., a CPU which is a microcomputer constituting a control unit executing a control program previously stored in a recording medium such as an ROM.

The connection parameter server 13 is a server for transmitting to the access point 12 the connection parameter required for the wireless terminal 11 and access point 12 to communicate with each other according to a predetermined wireless communication specification. The connection parameter server 13 functionally includes a connection parameter transmission means 131 and a connection parameter holding means 132. These means 131 and 132 are implemented by, e.g., a not shown communication interface mounted in the connection parameter server 13 and a microcomputer incorporated in the communication interface. The control of the operations is performed by, e.g., a CPU which is a microcomputer constituting a control unit executing a control program previously stored in a recording medium such as an ROM.

The network 14 is a function for exchanging data between the access point 12 and connection parameter server 13.

In FIG. 1, the terminal connection parameter acquisition means 111 acquires the terminal connection parameter from the terminal connection parameter transmission means 121. The data transfer between the terminal connection parameter acquisition means 111 and terminal connection parameter transmission means 121 is achieved by a not shown wired connection, a communication means, such as IrDA (Infrared Data Association), that does not require presetting, or a not shown card access means such as an IC card or non-contact IC card. In place of the IrDA that uses an infrared ray, a communication means using a visible light may be employed. Further, a configuration may be adopted in which data of the connection parameter is displayed as a barcode or two-dimensional barcode on a predetermined display screen such as a not shown display apparatus that the access point 12 has and a not shown barcode reader that the wireless terminal 11 has is used to read the barcode or two-dimensional barcode. In this case, as the barcode reader, a not shown image pickup device such as a digital camera may be employed. As a barcode conversion algorithm for converting data into a barcode or two-dimensional barcode, a known one may be applied.

In FIG. 1, the terminal side wireless communication means 112 is a function for performing a data communication with the access point 12 according to a predetermined communication specification. The data communication is achieved by using the connection parameter received through the terminal connection parameter acquisition means. The Function of the terminal side wireless communication means 112 is used by a not shown telephone function, browser function, or mail function provided in the wireless terminal 11, whereby a communication service is provided to a user.

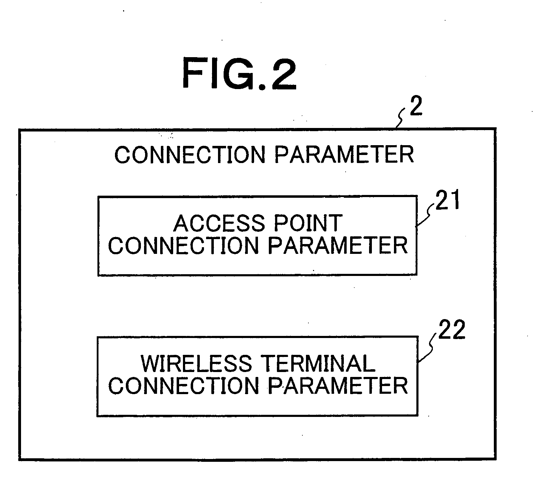

In FIG. 1, when connecting to the network 14, the connection parameter acquisition means 123 uses the network address or URL (Uniform Resource Locator) of the connection parameter server 13 that has previously been stored therein to request the connection parameter transmission means 131 to transmit thereto the connection parameter and acquires a connection parameter 2 shown in FIG. 2.
The connection parameter 2 is, as shown in FIG. 2, constituted by an access point connection parameter 21 and a wireless terminal connection parameter 22 (details of which will be described later). After acquiring the connection parameter 2, the connection parameter acquisition means 123 sets the access point connection parameter 21 in the access point side wireless communication means 124 and stores the wireless terminal connection parameter 22 in the terminal connection parameter holding means 122.

In FIG. 1, the terminal connection parameter holding means 122 receives the wireless terminal connection parameter 22 from the connection parameter acquisition means and holds it.

In FIG. 1, when a request of transmitting the wireless terminal connection parameter 22 is issued from the terminal connection parameter acquisition means 111, the terminal connection parameter transmission means 121 receives the wireless terminal connection parameter 22 from the terminal connection parameter holding means 122 and transmits it to the terminal connection parameter acquisition means 111.

In FIG. 1, the access point side wireless communication means 124 is a function of performing a data communication with the wireless terminal 11 according to a predetermined communication specification using the access point connection parameter. After establishment of a communication line between the access point 12 and wireless terminal 11 by a predetermined wireless communication specification, the wireless terminal 11 can communicate with the network through a not shown network connection means (ADSL (Asymmetric Digital Subscriber Line), Ethernet®, or cable TV network).

In FIG. 1, the connection parameter holding means 132 has a function of holding the connection parameter 2.

In FIG. 1, when a request of transmitting the connection parameter 2 is issued from the connection parameter acquisition means 123, the connection parameter transmission means 131 receives the connection parameter 2 from the connection parameter holding means 132 and transmits it to the connection parameter acquisition means 123.

FIG. 2 shows a configuration of the connection parameter transferred between the access point 12 and connection parameter server 13 shown in FIG. 1.

The connection parameter 2 is data constituted by the access point connection parameter 21 and wireless terminal connection parameter 22. The data in the connection parameter 2 is described in a binary form or in a text form.

In FIG. 2, the access point connection parameter 21 is a parameter required the access point 12 to communicate with the wireless terminal 11 according to a predetermined wireless communication specification. For example, it is preferable that the access point connection parameter 21 include at least one of the following wireless parameters: an ID, a password corresponding to the ID, a user name, a password corresponding to the user name, and electronic certificate. In addition to the above wireless parameters, the access point connection parameter 21 may include information concerning a network or service, such as a DNS server address, a Web proxy address, or subnet mask.

In FIG. 2, the wireless terminal connection parameter 22 is a parameter required the wireless terminal 11 to communicate with the access point 12 according to a predetermined wireless communication specification. For example, it is preferable that the wireless terminal connection parameter 22 include at least one of the following wireless parameters: an ID, a password corresponding to the ID, a user name, a password corresponding to the user name, and electronic certificate. In addition to the above wireless parameters, the wireless terminal connection parameter 22 may include information concerning a network or service, such as a DNS server address, a Web proxy address, or subnet mask.

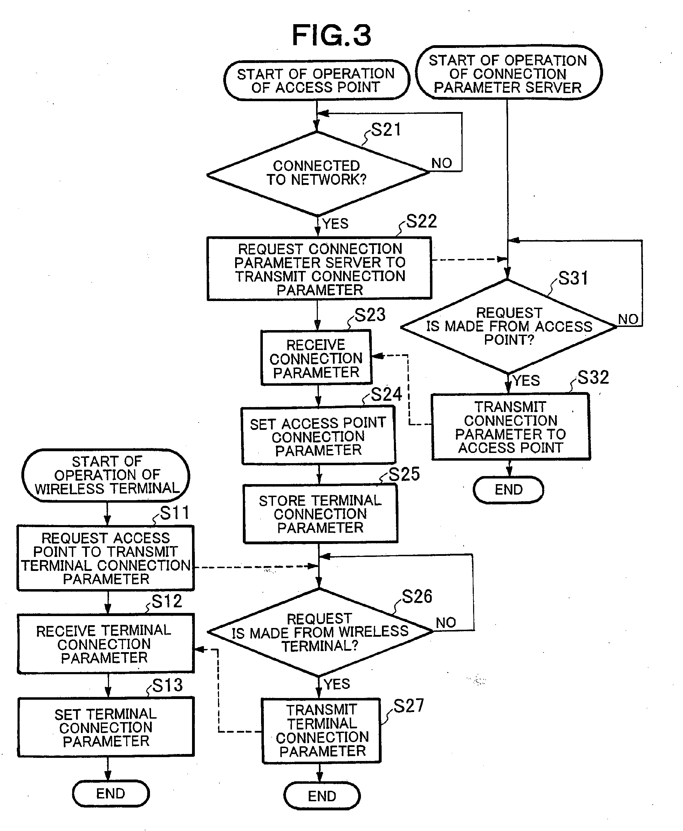

Operation of the present embodiment will next be described with reference to a time chart of FIG. 3. Control programs (programs using the connection parameter setting method according to the present invention) corresponding to respective operation procedures of the wireless terminal 11, access point, and connection parameter server 13 are stored in recording media such as an ROM provided in control units (not shown) incorporated therein and readout by CPUs in the control units at the operation time for execution.

First, in step S21 on the access point 12 side, the connection parameter acquisition means 123 monitors a connection state to the network 14. When the connection parameter acquisition means 123 detects that a connection to the network 14 has been established (YES), the flow advances to step S22.

In step S22 on the access point 12 side, the connection parameter acquisition means 123 uses information such as the network address or URL of the connection parameter server 13 that has previously (e.g., at the shipment of the access point) been set to request the connection parameter server 13 to transmit thereto the connection parameter 2.

In step S31 on the connection parameter server 13 side, the connection parameter transmission means 131 waits for the request transmitted from the connection parameter acquisition means 123 in step S32. When the connection parameter transmission means 131 receives the request (YES), the flow advances to step S32. In step S32 on the connection parameter server side, the connection parameter transmission means 131 receives the connection parameter 2 from the connection parameter holding means 132 and transmits the connection parameter 2 to the connection parameter acquisition means 123.

In step S23 on the access point 12 side, the connection parameter acquisition means 123 receives the connection parameter 2 from the connection parameter transmission means 131, and the flow advances to step S24.

In step S24 on the access point 12 side, the connection parameter acquisition means 123 extracts the access point connection parameter 21 from the connection parameter 2 received from the connection parameter transmission means 131 and sets the access point connection parameter 21 in the access point side wireless communication means 124.

In step S25, the access point 12 extracts the wireless terminal connection parameter 22 from the connection parameter 2 that the connection parameter acquisition means 123 receives from the connection parameter transmission means 131 and stores the wireless terminal connection parameter 22 in the terminal parameter holding means 122.

In step S26 on the access point 12 side, the terminal connection parameter transmission means 121 waits for a transmission request of the wireless terminal connection parameter 22 from the terminal connection parameter acquisition means 111. When the transmission request is made (YES), the flow advances to step S27.

In step S11 on the wireless terminal 11 side, the terminal connection parameter acquisition means 111 uses a communication method that does not require presetting to issue the transmission request of the wireless terminal connection parameter 22 to the terminal connection parameter transmission means 121.

In step S27 on the access point 12 side, the terminal connection parameter transmission means 121 receives the wireless terminal connection parameter 22 from the terminal parameter holding means 122 and transmits the wireless terminal connection parameter 22 to the terminal connection parameter acquisition means 111.

In step S12 on the wireless terminal 11 side, the terminal connection parameter acquisition means 111 receives the wireless terminal connection parameter 22 transmitted from the terminal connection parameter transmission means 121.

In step S13 on the wireless terminal 11 side, the terminal connection parameter acquisition means 111 sets the wireless terminal connection parameter 22 in the terminal side wireless communication means 112.

As described above, in the above embodiment, the access point 12 access the connection parameter server 13 at the timing at which it is connected to the network 14 and acquires the connection parameter 2 from the connection parameter server 13. Then, the access point 12 extracts the access point connection parameter 21 from the connection parameter 2 and sets the access point connection parameter 21 in the access point side wireless communication means 124. With the above configuration, it is possible to automatically complete the setting of the access point 12 side which is necessary for performing a communication according to a predetermined wireless communication specification, thereby eliminating the need to use a personal computer for performing the setting of the access point 12 side.

Further, in the present embodiment, the wireless terminal receives the wireless terminal connection parameter 22 from the access point 12 through a communication means that does not require presetting and sets the wireless terminal connection parameter 22 in the terminal side wireless communication means 112. With the above configuration, it is also possible to automatically complete the setting of the wireless terminal 11 side which is necessary for performing a communication with the access point 12 according to a predetermined wireless communication specification.

An IC card reader/writer function (not shown) may be provided between the terminal connection parameter acquisition means 111 and terminal connection parameter transmission means 121 so as to allow the wireless terminal connection parameter 22 to be transferred through an IC card or non-contact IC card.

As an application example of the above embodiment, a configuration may be adopted according to the actual system operating condition in which a service charge is calculated based on the number of usages of the service or period of service in the case where the connection parameter server 13 transmits a connection parameter for performing a communication according to a predetermined wireless communication specification. As another application example, a configuration may be adopted according to the actual system operating condition in which a service charge is calculated based on the number of usages of the service or period of service in the case where the connection parameter server 13 transmits a connection parameter other than the connection parameter for performing a communication according to a predetermined wireless communication specification.
As a processing algorism used in the above application examples, a configuration may be adopted in which the number of usages of the service or period of service is registered in an updatable manner in a table or database on a user-by-user basis and, based on the registered data, the service charge is calculated according to a formula such as: number of usages * unit price or period of service * unit price. This processing algorism may previously be stored in a recording medium such as an ROM or hard disk provided inside the connection parameter server 13 as a processing program that can be executed by a CPU in the connection parameter server 13.

### (Second Embodiment)

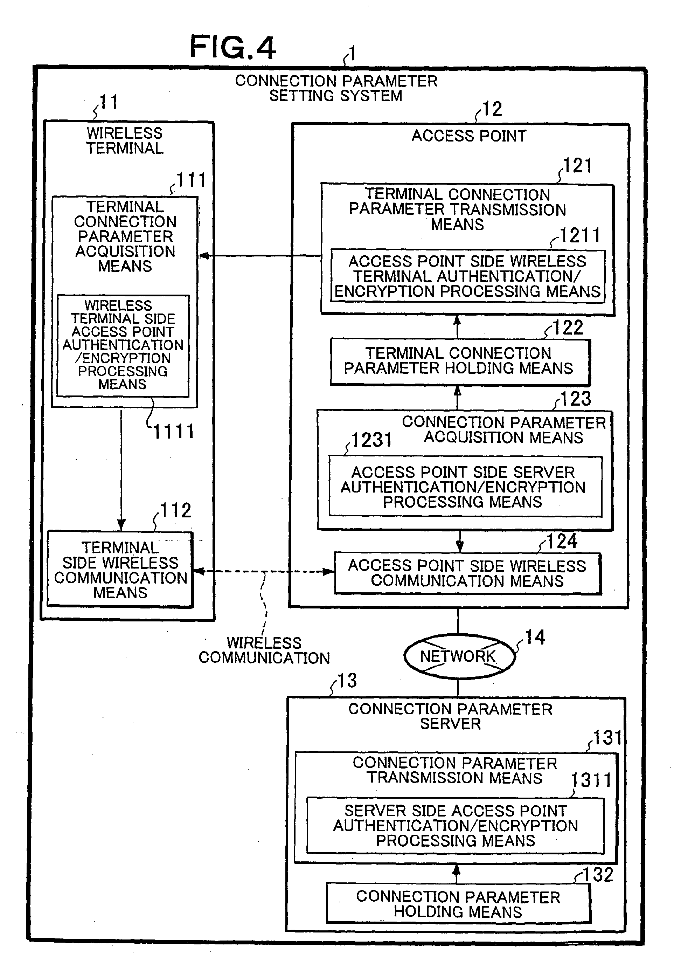

A second embodiment of the present invention will next be described. Although the basic configuration of the second embodiment is substantially same as that of the first embodiment, a further twist is added to the transfer of the connection parameter between the connection parameter server and access point and transfer of the terminal connection parameter between the wireless terminal and access point. A configuration of the second embodiment is shown in FIG. 4. As shown in FIG. 4, the connection parameter setting system 1 further includes a wireless terminal side access point authentication/encryption processing means 1111, an access point side wireless terminal authentication/encryption processing means 1211, an access point side server authentication/encryption processing means 1231, and a server side access point authentication/encryption processing means 1211, in addition to the configuration shown in FIG. 1.

In FIG. 4, when the connection parameter acquisition means 123 requests the connection parameter transmission means 131 to transmit thereto the connection parameter, the server side access point authentication/encryption processing means 1311 performs an authentication check to determine whether the access point 12 is valid or not and encrypts the connection parameter. If the authentication fails, the connection parameter is not transmitted.

In FIG. 4, when the access point side server authentication/encryption processing means 1231 requests the connection parameter transmission means 131 to transmit thereto the connection parameter, the access point side server authentication/encryption processing means 1231 performs an authentication check to determine whether the server 13 is valid or not and decrypts the received connection parameter. If the authentication fails, the connection parameter 2 is not received. In the case where the authentication fails, the abnormality may be notified to an operator by, e.g., lighting a not shown alarm lamp of the access point 12.

In FIG. 4, when the terminal connection parameter acquisition means 111 requests the terminal connection parameter transmission means 121 to transmit thereto the wireless terminal connection parameter 22, the access point side wireless terminal authentication/encryption processing means 1211 performs an authentication check to determine whether the wireless terminal 11 is valid or not and encrypts the wireless terminal connection parameter 22. If the authentication fails, the wireless terminal connection parameter 22 is not transmitted.

In FIG. 4, when the terminal connection parameter acquisition means 111 requests the terminal connection parameter transmission means 121 to transmit thereto the wireless terminal connection parameter 22, the wireless terminal side access point authentication/encryption processing means 1111 performs an authentication check to determine whether the access point 12 is valid or not and decrypts the encrypted wireless terminal connection parameter 22 transmitted from the terminal connection parameter transmission means 121. If the authentication fails, the wireless terminal connection parameter 22 is not received.

The wireless terminal side access point authentication/encryption processing means 1111, access point side wireless terminal authentication/encryption processing means 1211, and access point side server authentication/encryption processing means 1231 perform the authentication check by using an ID, a password, electronic certificate, and the like. Although these information are previously set in the respective apparatus before their shipment in general, a means for setting the information after their shipment may additionally be provided.

Likewise, the server side access point authentication/encryption processing means 1311 performs the authentication check by using an ID, a password, electronic certificate, and the like. The addition or deletion of the information is made for the server 13 by a reliable server administrator.

As described above, in the present embodiment, when the wireless terminal connection parameter 22 is transferred between the wireless terminal 11 and access point 12, the authentication check and data encryption is made on both the access point 12 side and connection parameter server 13 side. With the above configuration, the wireless terminal connection parameter 22 can safely be transferred between the wireless terminal 11 and access point 12.

In this configuration, the access point side wireless terminal authentication/encryption processing means 1211 may use a not shown IC card reader/writer to perform the authentication check through an IC card or non-contact IC card and store an encrypted wireless terminal connection parameter in the IC card or non-contact IC card. In this case, the wireless terminal side access point authentication/encryption processing means 1111 may use a not shown IC card reader/writer to perform the authentication check through an IC card or non-contact IC card and acquire the encrypted wireless terminal connection parameter from the IC card or non-contact IC card. For example, a UIM (User Identity Module) card which can be put into a wireless terminal may be utilized in the authentication system using the IC card.

### (Third Embodiment)

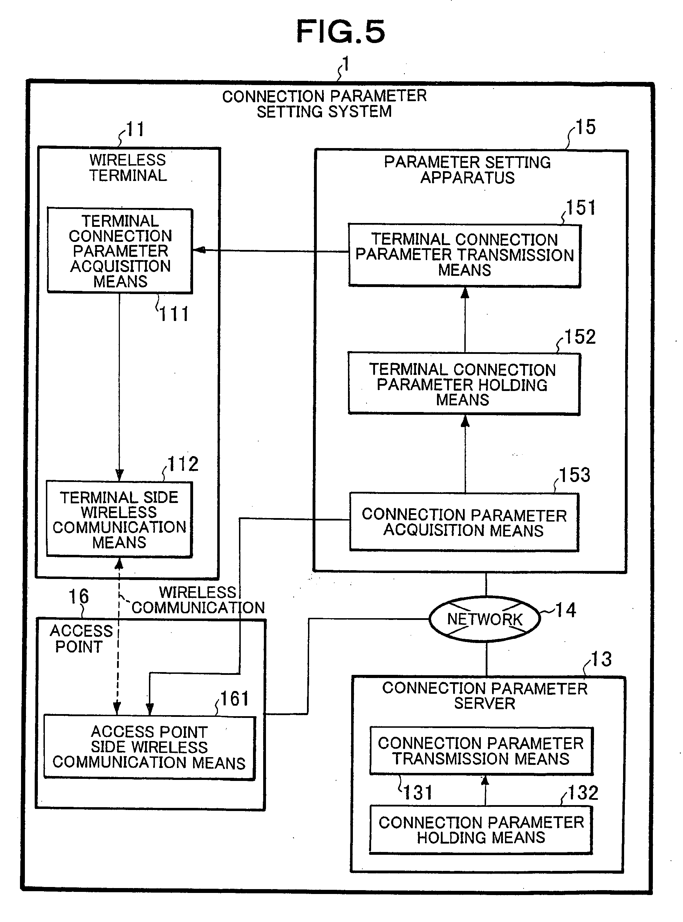

A third embodiment of the present invention will next be described. The basic configuration of the second embodiment is substantially same as that of the first embodiment except that the access point side wireless communication means 124 and other functions in the access point 12 are provided in another apparatus. A configuration of the third embodiment is shown in FIG. 5.

As shown in FIG. 5, a parameter setting apparatus 15 includes a terminal connection parameter transmission means 151, a terminal setting parameter holding means 152, and a connection parameter acquisition means 153, which are functions other than the access point side wireless communication means of the access point 12 of FIG. 1. The terminal connection parameter transmission means 151, terminal setting parameter holding means 152, and connection parameter acquisition means 153 have the same functions and perform the same operation as those of the terminal connection parameter transmission means 121, terminal setting parameter holding means 152, and connection parameter acquisition means 153 which are shown in FIG. 1. The different point is that the connection parameter acquisition means 153 performs setting of the access point connection parameter for an access point side wireless communication means 161 provided in an access point 16. The above means 151 to 153 are achieved by, e.g., operations of a not shown communication interface mounted in the parameter setting apparatus 15 and a microcomputer incorporated in the communication interface. The control of the operations is performed by, e.g., a CPU (Central Processing Unit) which is a microcomputer constituting a control unit executing a control program previously stored in a recording medium such as an ROM.

In FIG. 5, the access point 16 includes only the function of the access point side wireless communication means 121 which is originally provided in the access point 12 of FIG. 1.

The parameter setting apparatus 15 and access point 16 are connected to each other through a local network and, through the local network, the connection parameter acquisition means 153 performs setting of the connection parameter for the access point side wireless communication means 161.

In the present embodiment, the functions of the access point 12 of FIG. 1 are separately provided in the access point 16 and parameter setting apparatus 15 and, in particular, the access point 16 may be any one whose setting can be made through the local network. The above configuration allows the use of an existing access point that does not support the features of the present invention.

As in the case of the second embodiment, the authentication/encryption processing means may be added respectively to the wireless terminal 11, parameter setting apparatus 15, and connection parameter server 13 for safety connection parameter exchange and setting.

### (Fourth Embodiment)

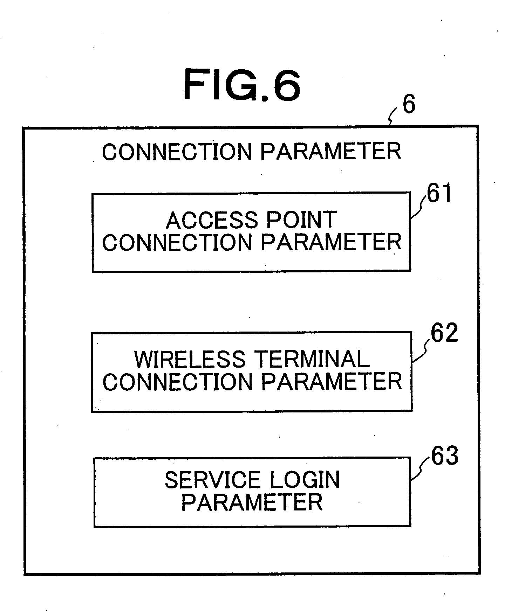

A fourth embodiment of the present invention will next be described. The basic configuration of the second embodiment is substantially same as that of the first embodiment except that the function of the connection parameter 2 is expanded so as to be able to include a parameter other than the connection parameters between the wireless terminal 11 and access point 12. A configuration of the fourth embodiment is shown in FIG. 6.

A connection parameter 6 shown in FIG. 6 includes an access point connection parameter 61, a wireless terminal connection parameter 62 (which are the same as the access point connection parameter 21 and wireless terminal connection parameter 22, respectively), and a newly added service login parameter 63. In the system shown in FIG. 1, the terminal setting parameter transmission means 121 transmits the wireless terminal connection parameter 62 and service login parameter 63 to the terminal connection parameter acquisition means 111.

The terminal connection parameter acquisition means 111 sets only the wireless terminal connection parameter 62 in the terminal side wireless communication means 112 and holds the service login parameter 63 in a not shown holding means. The service login parameter 63 is used when a not shown application in the wireless terminal 11 connects to a communication service through the network 14. In the present invention, setting concerning the application operating on the wireless terminal 11 can be achieved as well as the setting for the communication according to a predetermined wireless specification.

Examples of data that the service login parameter 63 handles include services accessed through a network, such as a mail service, Web service, MobileIP service, VPN (Virtual Private Network) service and services for accessing external devices using a short-range wireless communication or wired connection function.

### (Fifth Embodiment)

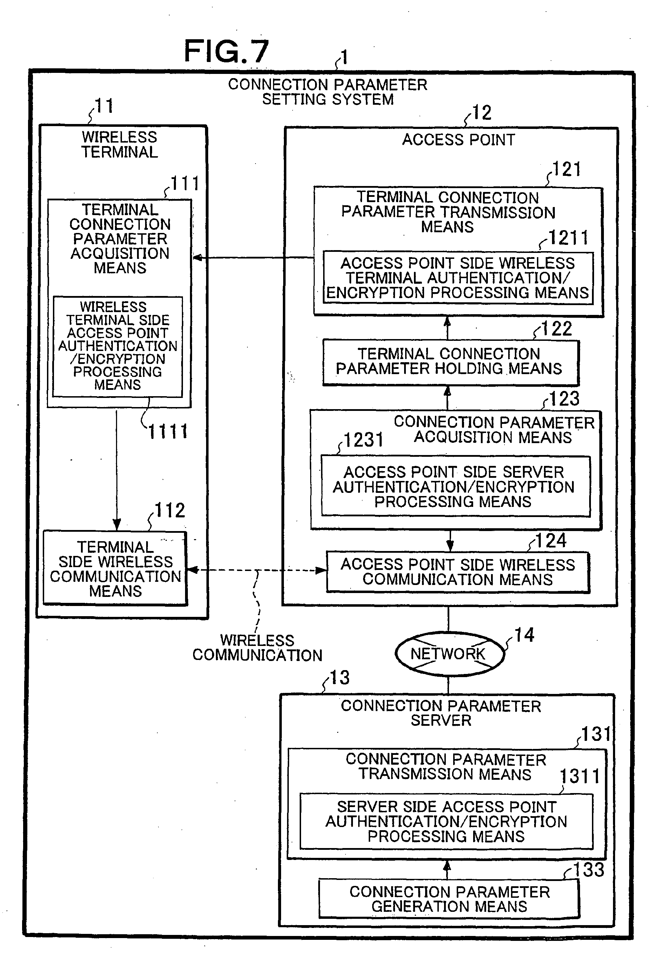

A fifth embodiment of the present invention will next be described. The basic configuration of the second embodiment is substantially same as that of the fourth embodiment except that the connection parameter server 13 generates different connection parameters for each access point 12 with a unique ID for each access point 12 included in the information used to authenticate the access point 12. A configuration of the fifth embodiment is shown in FIG. 7.

As shown in FIG. 7, the connection parameter holding means 132 of FIG. 4 is replaced by a connection parameter generation means 133.

In FIG. 7, when the access point side server authentication/encryption processing means 1231 and server side access point authentication/encryption processing means 1311 perform a mutual authentication check, the access point 12 transmits its access point unique ID to the connection parameter server 13. The connection parameter generation means 133 generates different connection parameters 2 for each access point unique ID and transmits them to each access point 12. Thus, in the present embodiment, a unique connection parameter 2 can be set for each access point 12, thereby increasing the security level of the system.

### Industrial Applicability

As described above, the present invention is applicable to a connection parameter setting system, its method, access point, server, wireless terminal, and parameter setting apparatus. In particular, the present invention is suitably applied to a system for setting communication parameters in both a wireless terminal and access point. Concretely, the present invention is applicable, e.g., to a case where a mobile phone having a wireless LAN function is used as a wireless terminal at home.

In recent years, mobile phones accessible both to a wireless LAN and mobile phone network are available in the market. However, considering a use of the mobile phone for receiving a wireless LAN service at home, it is necessary for a user to purchase an access point by him or herself, to connect the access point and a personal computer so as to perform setting of a connection parameter for communicating with the access point, and to perform setting of a connection parameter for the mobile phone on a poor interface thereof so as to connect the mobile phone to the wireless LAN. It is hard for the user to carry out the setting work unless he or she is very familiar with the operations of the mobile phone, access point, and personal computer.

When the present invention is applied to the access point and mobile phone having a wireless LAN function, the user can accomplish the setting for the access point only by purchasing the access point and connecting it to an ADSL, Ethernet®, or cable TV network. Further, if the access point has a communication function supporting an IrDA, it is possible to utilize the IrDA function that is implemented in many models of mobile phones to acquire a mobile phone side connection parameter from the access point. The above configuration significantly simplifies wireless LAN settings of the access point and mobile phone to allow a wireless LAN service to be received using the mobile phone at home. Since there is no need of using the personal computer for setting of the access point, it is possible to increase the number of users who enjoy the wireless LAN service more than ever before.

Further, by using a setting server provided from a telecommunications carrier or service provider, it is possible to set information concerning a desired service in the mobile phone, which significantly simplifies setting for receiving the service to expand the possibility that the number of users who enjoy the wireless LAN service is increased more than ever before. At the same time, there is a possibility that the telecommunications carrier or service provider can use such a setting service to create a new business.

## Claims

1. A connection parameter setting system comprising:
an access point and a wireless terminal which communicate with each other using a predetermined connection parameter according to a predetermined wireless communication specification; and
a server which is accessibly connected to the access point through a network and which holds the previously set connection parameter including an access point connection parameter and wireless terminal connection parameter so as to supply it to the access point, wherein
the server comprises means for supplying the connection parameter to the access point through the network,
the access point comprises means for acquiring the connection parameter from the server through the network, means for setting the access point connection parameter included in the acquired connection parameter in the access point itself, and parameter supply means for supplying the wireless terminal connection parameter included in the acquired connection parameter to the wireless terminal, and
the wireless terminal comprises parameter acquisition means for acquiring the wireless terminal connection parameter from the access point, and means for setting the acquired wireless terminal connection parameter in the wireless terminal itself.

2. The connection parameter setting system according to claim 1, wherein
the wireless communication specification is at least one of IEEE802.11b, IEEE802.11a, and IEEE802.11g.

3. The connection parameter setting system according to claim 1, wherein
the wireless communication specification is Bluetooth.

4. The connection parameter setting system according to any one of claims 1 to 3, wherein
the access point connection parameter and wireless terminal connection parameter each include at least one of ID information, password corresponding to the ID information, user name, password corresponding to the user name, and electronic certificate.

5. The connection parameter setting system according to any one of claims 1 to 4, wherein
the connection parameter server further comprises means for authenticating the access point before supplying the connection parameter to the access point and means for encrypting the connection parameter so as to supply it to the access point,
the access point further comprises first authentication means for authenticating the connection parameter before receiving the connection parameter from the connection parameter server, means for decrypting the connection parameter transmitted from the connection parameter server, means for authenticating the wireless terminal before supplying the wireless terminal connection parameter to the wireless terminal, and means for encrypting the wireless terminal connection parameter so as to supply it to the wireless terminal, and
the wireless terminal further comprises second authentication means for authenticating the access point before receiving the wireless terminal connection parameter from the access point and means for decrypting the wireless terminal connection parameter transmitted from the access point.

6. A connection parameter setting system comprising:
an access point and a wireless terminal which communicate with each other using a predetermined connection parameter according to a predetermined wireless communication specification;
a server which is connected to a network and which holds the previously set connection parameter including an access point connection parameter and wireless terminal connection parameter so as to supply it to the access point; and
a parameter setting apparatus which is communicably connected to the server through the network and which is communicably connected to the access point, wherein
the server comprises means for supplying the connection parameter to the connection parameter setting apparatus,
the connection parameter setting apparatus comprises means for acquiring the connection parameter from the server, means for setting the access point connection parameter included in the acquired connection parameter in the access point, and parameter supply means for supplying the wireless terminal connection parameter included in the acquired connection parameters to the wireless terminal, and
the wireless terminal comprises parameter acquisition means for acquiring the wireless terminal connection parameter from the parameter setting apparatus, and means for setting the acquired wireless terminal connection parameter in the wireless terminal itself.

7. The connection parameter setting system according to any one of claims 1 to 6, wherein
the connection parameter includes a connection parameter for performing a communication according to the predetermined wireless communication specification and connection parameter for the wireless terminal to receive a predetermined communication service on the network.

8. The connection parameter setting system according to any one of claims 1 to 7, wherein
the server further comprises means for generating a unique connection parameter for each access point.

9. The connection parameter setting system according to any one of claims 1 to 6, wherein
the server further comprises means for calculating a service charge based on the number of usages of the service or period of service when supplying the connection parameter for performing a communication according to the predetermined wireless communication specification.

10. The connection parameter setting system according to claim 8, wherein
the server further comprises means for calculating a service charge based on the number of usages of the service or period of service when supplying a connection parameter other than the connection parameter for performing a communication according to the predetermined wireless communication specification.

11. The connection parameter setting system according to claim 5, wherein
the first and second authentication means uses a function of a UIM (User Identity Module) of the wireless terminal to perform authentication between the access point and wireless terminal.

12. The connection parameter setting system according to any one of claims 1 to 5, wherein
the parameter supply means and parameter acquisition means each have communication means using IrDA.

13. The connection parameter setting system according to claim 6, wherein
the parameter supply means and parameter acquisition means each have communication means using IrDA.

14. The connection parameter setting system according to any one of claims 1 to 5, wherein
the parameter supply means and parameter acquisition means each have communication means using visible light.

15. The connection parameter setting system according to claim 6, wherein
the parameter supply means and parameter acquisition means each have communication means using visible light.

16. The connection parameter setting system according to any one of claims 1 to 4, wherein
the parameter supply means has display means for converting data of the connection parameter into a barcode or two-dimensional barcode so as to display it on a predetermined display screen, and
the parameter acquisition means has barcode reading means for reading the barcode or two-dimensional barcode displayed on the display screen.

17. An access point which uses a predetermined connection parameter to communicate with a wireless terminal according to a predetermined wireless communication specification and which is communicably connected through a network to a server which holds the previously set connection parameter including an access point connection parameter and wireless terminal connection parameter so as to supply it to the access point, comprising:
means for acquiring the connection parameter from the server through the network;
means for setting the access point connection parameter included in the acquired connection parameter in the access point itself; and
means for supplying the wireless terminal connection parameter included in the acquired connection parameter to the wireless terminal.

18. A server which is accessibly connected through a network to the access point which uses a predetermined connection parameter to communicate with a wireless terminal according to a predetermined wireless communication specification and which holds the previously set connection parameter including an access point connection parameter and wireless terminal connection parameter so as to supply it to the access point, comprising:
parameter supply means for supplying the connection parameter to the access point through the network.

19. A wireless terminal which uses a predetermined connection parameter to communicate with an access point according to a predetermined wireless communication specification, comprising:
means for acquiring the wireless terminal connection parameter from the access point; and
means for setting the acquired wireless terminal connection parameter in the wireless terminal itself.

20. A parameter setting apparatus which is connected through a network to a server which holds the previously set connection parameter including an access point connection parameter and wireless terminal connection parameter so as to supply it to the access point, comprising:
means for acquiring the connection parameter from the server;
means for setting the access point connection parameter included in the acquired connection parameter in the access point; and
means for supplying the wireless terminal connection parameter included in the acquired connection parameters to the wireless terminal.

21. A connection parameter setting method for use in a connection parameter setting system including: an access point and a wireless terminal which communicate with each other using a predetermined connection parameter according to a predetermined wireless communication specification; and a server which is accessibly connected to the access point through a network and which holds the previously set connection parameter including an access point connection parameter and wireless terminal connection parameter so as to supply it to the access point, the method comprising:
a step in which the server supplies the connection parameter to the access point through the network;
a step in which the access point acquires the connection parameter from the server through the network;
a step in which the access point sets the access point connection parameter included in the acquired connection parameter in the access point itself;
a step in which the access point supplies the wireless connection parameter included in the acquired connection parameter to the wireless terminal;
a step in which the wireless terminal acquires the wireless terminal connection parameter from the access point; and
a step in which the wireless terminal sets the acquired wireless terminal connection parameter in the wireless terminal itself.

22. A connection parameter setting method for use in a connection parameter setting system including: an access point and a wireless terminal which communicate with each other using a predetermined connection parameter according to a predetermined wireless communication specification; a server which is connected to a network and which holds the previously set connection parameter including an access point connection parameter and wireless terminal connection parameter so as to supply it to the access point; and a parameter setting apparatus which is communicably connected to the server through the network and which is communicably connected to the access point, the method comprising:
a step in which the server supplies the connection parameter to the parameter setting apparatus;
a step in which the parameter setting apparatus acquires the connection parameter from the server;
a step in which the parameter setting apparatus sets an access point connection parameter included in the connection parameter in the access point;
a step in which the parameter setting apparatus supplies the wireless connection parameter included in the acquired connection parameter to the wireless terminal;
a step in which the wireless terminal acquires the wireless terminal connection parameter from the parameter setting apparatus; and
a step in which the wireless terminal sets the acquired wireless terminal connection parameter in the wireless terminal itself.
